# DEMANDE DE BREVET EUROPEEN

(11) **EP 0 780 668 A1**
(43) Date de publication de la demande: **25.06.1997**
(21) Numéro de dépôt: 96430017.2
(22) Date de dépôt: 13.12.1996
(51) Int. Cl.: G01H 1/00, G10K 11/00

(54) **Procédé et dispositif de mesure de vibrations**

(30) Priorité: 22.12.1995 FR 9515870
(71) Demandeur: NAPHTACHIMIE S.A., F-92400 Courbevoie (FR)
(72) Inventeur: Bellet, Serge, 13220 Chateauneuf-les Martigues (FR); Brouillet, Jean-Luc, 13117 Lavera (FR); Bazzoni, Daniel, 13500 Martigues (FR)
(74) Mandataire: Somnier, Jean-Louis

(57) **Abrégé**

Le secteur technique de l'invention est le domaine des procédés et dispositifs de traitement thermique de produits, notamment de produits chimiques.

La présente invention a pour objet un procédé et dispositif de mesure de vibrations d'un tube dans lequel circulent un ou plusieurs fluides et qui est disposé dans une enceinte thermique dont la température est élevée, dans lesquels on utilise un capteur sensible aux vibrations qui est disposé à l'intérieur de l'enceinte.

## Description

La présente invention a pour objet un procédé et dispositif de mesure de vibrations d'un conduit dans lequel circulent un ou plusieurs produits, et qui est situé dans un four tel qu'un four de craquage thermique ou dans un appareil d'échange thermique.

Le secteur technique de l'invention est le domaine des procédés et dispositifs de traitement thermique de produits tels que des réactifs chimiques.

On connaît par la demande WO 92/11931 (NAPHTACHIMIE et al), un procédé et un dispositif de fabrication d'un ou plusieurs produits chimiques dans lesquels on réalise une réaction chimique en faisant circuler un ou plusieurs réactifs à l'intérieur d'un tube disposé dans une zone de radiation d'un four, le tube étant soumis à une vibration pour limiter les dépôts de sous-produits sur la paroi interne du tube.

La présente invention vise à améliorer les procédés et dispositifs tels que ceux décrits dans ce document, en procurant un procédé et un dispositif de mesure de la vibration d'un tube situé dans une enceinte (dite enceinte thermique ou enceinte d'échanges thermiques) portée à une température élevée et dans lequel circulent des produits généralement fluides, tels que des réactifs chimiques.

Selon un premier aspect de l'invention, dans un procédé de mesure de vibrations d'un conduit disposé dans une enceinte thermique et dans lequel circule au moins un fluide, on utilise un capteur de vibrations disposé à l'intérieur de l'enceinte thermique.

Selon un mode particulier de réalisation, on mesure l'amplitude et/ou la phase et/ou la fréquence des vibrations du conduit dans lequel circule(nt) un ou plusieurs fluides (gazeux et/ou liquides), lequel conduit est disposé dans une zone de radiation d'un four (équipé de brûleurs) dont la température est élevée, c'est-à-dire au moins égale à 300°C, de préférence au moins égale à 500°C, généralement inférieure ou égale à 1500°C ; de préférence, on utilise un capteur sensible aux vibrations mécaniques du conduit, qui sont directement transmises au capteur par conduction et/ou par contact, tel qu'un accéléromètre de préférence de type piézo-électrique.

La mesure des vibrations du conduit consiste à mesurer le déplacement, ou bien la vitesse, ou bien l'accélération d'une zone (ponctuelle) ou partie du conduit, et consiste plus particulièrement à mesurer la variation de ces grandeurs au cours du temps ; on mesure généralement l'amplitude et/ou la phase et/ou la fréquence des signaux représentatifs de ces grandeurs.

Les fluides circulant dans le conduit dont on veut mesurer la vibration, peuvent être par exemple des composés hydrocarbonés, en particulier des hydrocarbures, des produits pétroliers, ou bien des produits tels que de l'huile de ricin.

Selon des modes préférentiels de mise en oeuvre du procédé de mesure suivant l'invention :
- on solidarise ledit capteur à un support, et on met en appui ledit support de capteur sur ledit conduit, pour permettre et favoriser une transmission par conduction des vibrations dudit conduit à une partie au moins (une extrémité) dudit support, et la transmission des vibrations dudit support audit capteur ;
- on maintient le capteur de vibrations à une température inférieure à la température de l'enceinte, par exemple à une température généralement inférieure à 500°C, notamment à une température inférieure à 300°C ; de préférence on maintient le capteur à une température inférieure à (ou de l'ordre de) 100 à 200°C, en le refroidissant par un fluide de refroidissement circulant dans un support du capteur, lequel fluide est de préférence essentiellement constitué par un liquide, tel que de l'eau ;
- on mesure (et on traite) les signaux délivrés par ledit capteur de vibrations dans une gamme de fréquences inférieures à 5000 Hz, de préférence à des fréquences situées dans une bande allant de 10 Hz à 2000 Hz, par exemple dans une bande de fréquence allant de 10 Hz à 1000 Hz ou plus spécialement de 20 Hz à 1000 Hz ; cette dernière gamme de fréquence de mesure suffit généralement à mesurer les principales vibrations transversales, c'est-à-dire de flexion, du conduit ;
- on dispose un capteur de vibrations dans une première cavité prévue à une première extrémité d'un support dudit capteur, lequel support est creux, de forme allongée, par exemple en forme de barreau ou de tube ;
- on raccorde, au voisinage d'une deuxième extrémité du support de capteur, un conduit d'entrée d'un fluide de refroidissement du capteur et un conduit de sortie du fluide de refroidissement, et on fait circuler un fluide de refroidissement à l'intérieur du support du capteur ;
- on fixe le support de capteur à une paroi de l'enceinte par des moyens de fixation qui sont situés de préférence du côté extérieur de la paroi (par référence à l'enceinte), lesquels moyens de fixation ou de support sont flexibles, la première extrémité du support étant mise en contact avec une zone (dite zone de mesure) de la paroi extérieure du conduit dont on veut mesurer les vibrations ;
- on applique au support de capteur une force d'appui, sensiblement axiale, dirigée selon l'axe longitudinal Y du support, en direction de la première extrémité du support et de la zone de contact de cette extrémité du support avec le conduit, par des moyens d'appui tels que des moyens magnétiques, hydrauliques, pneumatiques ou mécaniques ;
- le cas échéant, on émet un signal d'alarme et/ou de commande de fonctionnement d'un organe générateur de vibrations apte à provoquer la mise en vibration du conduit dont on mesure les vibrations.

La solution au problème posé consiste également à proposer un dispositif de mesure de vibrations d'un conduit disposé dans une enceinte thermique, qui comporte un capteur de vibrations disposé à l'intérieur de l'enceinte thermique.

L'invention s'applique aux procédés et dispositifs de mesure des vibrations d'un corps creux tel qu'un tube, qui est disposé dans une enceinte portée à température élevée, telle que l'enceinte de radiation d'un four ou bien le corps d'un appareil d'échange thermique (échangeur de chaleur) ou d'un réacteur tubulaire.

L'invention s'applique particulièrement aux dispositifs de mesure de vibrations d'un tube disposé dans un four équipé de moyens de chauffe (ou de chauffage) d'une zone de radiation, tels que des moyens de chauffage électrique ou des brûleurs alimentés par un combustible, lequel four est utilisé pour chauffer, gazéifier ou transformer thermiquement ou chimiquement un produit ou un mélange de produits, et s'applique particulièrement aux fours de craquage thermique, et notamment aux fours équipés de parois munies d'orifices de fixation et/ou de passage de brûleurs.

Selon un mode préférentiel de réalisation de l'invention, le dispositif de mesure de vibrations du conduit disposé dans l'enceinte qui est délimitée par des parois, comporte :
- un capteur de mesure des vibrations d'une zone du conduit,
- des moyens de refroidissement du capteur,
- un support de capteur qui est allongé selon un premier axe Y, en forme de canne ou de canule ou de tube, qui est creux et étanche, qui comporte une première extrémité et une deuxième extrémité, lequel capteur est disposé (ou fixé) à l'intérieur dudit support creux, au voisinage de ladite première extrémité,
- un moyen de fixation souple selon au moins une direction parallèle à l'axe longitudinal du support, dudit support de capteur à une paroi de l'enceinte, de sorte que ledit support s'étend au travers d'un orifice prévu dans une paroi de l'enceinte en étant « suspendu » à la paroi de l'enceinte, et de sorte que :
   - son axe longitudinal (ledit premier axe Y) s'étend sensiblement perpendiculairement à l'axe longitudinal X de la partie du conduit contenant la zone dite de mesure,
   - ladite première extrémité dudit support est placée au contact de la face externe de la paroi du conduit dans ladite zone de mesure, de sorte que ladite première extrémité du support du capteur et ledit capteur sont disposés à l'intérieur de l'enceinte,
- des moyens de mise en appui (ou pression ou précontrainte) qui exercent sur le support de capteur une force dirigée vers le conduit, sensiblement selon l'axe longitudinal du support, c'est-à-dire une force dirigée vers la zone de mesure et d'appui du support de capteur sur le conduit dont les vibrations sont à mesurer.

Selon d'autres modes préférentiels de réalisation du dispositif de mesure :
- ledit support est essentiellement constitué par un boîtier ou canne cylindrique qui comporte :
   ∗ un premier boîtier délimitant de façon étanche une première cavité dans laquelle est logé le capteur de vibrations ;
   ∗ un deuxième boîtier délimitant une deuxième cavité (ou espace ou volume) recevant ledit premier boîtier ;
- les moyens de refroidissement du capteur peuvent comporter deux circuits distincts de refroidissement du capteur par deux fluides respectifs, lesquels moyens comportent :
   ∗ des conduits d'entrée d'un premier fluide de refroidissement, qui communiquent avec ladite deuxième cavité délimitée par ledit deuxième boîtier, et des conduits correspondants de sortie dudit premier fluide de refroidissement,
   ∗ des conduits d'entrée et de sortie d'un deuxième fluide de refroidissement à l'intérieur du support, permettant la circulation à l'intérieur dudit support et autour dudit deuxième boîtier d'un deuxième fluide de refroidissement ;
- le dispositif comporte en outre des moyens de guidage en translation selon l'axe Y longitudinal de la canne support-capteur, comportant par exemple des lames formant ressorts de suspension et servant également au guidage du support.

Selon un autre aspect, l'invention consiste en un procédé de traitement physique ou chimique d'un ou plusieurs produits circulant à l'intérieur d'un conduit disposé dans une enceinte thermique, dans lequel on soumet le(s) produit(s) à un traitement à l'intérieur du conduit et simultanément dans lequel on soumet ledit conduit à des vibrations pour limiter les dépôts de sous-produits sur la paroi interne du conduit, caractérisé en ce que l'on mesure les vibrations du conduit avec un capteur disposé à l'intérieur de l'enceinte.

Selon un autre aspect, l'invention procure un dispositif de traitement physique (thermique) ou chimique d'un ou plusieurs produits, qui comporte :
- un conduit disposé dans une enceinte thermique, dans lequel circulent le ou les produits à traiter physiquement ou chimiquement,
- un générateur de mise en vibrations dudit conduit,
   ledit dispositif comportant un capteur de vibrations du conduit disposé à l'intérieur de l'enceinte.

L'invention a notamment pour résultat de procurer des fours pour mettre en oeuvre des réactions chimiques tels que des fours de craquage thermique, qui sont équipés de dispositifs selon l'invention ; l'invention propose d'utiliser les dispositifs de mesure conformes à l'invention dans des procédés de fabrication d'un ou plusieurs produits chimiques, tels qu'un procédé de craquage thermique du dichloro-1, 2 éthane ou un procédé de craquage d'un mélange d'hydrocarbures et de vapeur d'eau ; le cas échéant, dans un procédé selon l'invention, on délivre un signal de commande d'un générateur de vibrations, en fonction d'un signal délivré par le capteur de vibrations.

L'invention permet de déterminer et de contrôler le niveau (amplitude) et/ou la fréquence des vibrations du conduit qui sont nécessaires et/ou suffisantes pour éviter le dépôt de sous-produits (tels que le coke qui se forme notamment dans les conduits où des réactifs chimiques sont soumis à un craquage thermique) à l'intérieur du conduit ; l'invention permet en outre de réaliser des mesures vibratoires dans des fours dont l'enceinte comporte des tubes ou faisceaux de tubes, que le four soit en fonctionnement ou à l'arrêt, et permet ainsi d'optimiser la commande et l'utilisation d'un ou plusieurs générateurs de vibrations des tubes ; le ou les générateurs peuvent être constitués par exemple par des brûleurs équipés de valves ou vannes provoquant des fluctuations du débit d'alimentation en combustible du brûleur, lesquelles fluctuations peuvent occasionner des fluctuations ou vibrations des flammes du four, occasionnant à leur tour la vibration des tubes du four, comme décrit dans le document WO 92/11931.

La mesure de vibration par contact ou par conduction, permet d'utiliser des capteurs simples, peu coûteux et fiables, par comparaison avec des systèmes de mesure à distance (sans contact), par exemple optiques.

Grâce aux moyens de refroidissement du capteur, l'invention permet de réaliser des mesures dans des conditions très sévères, de température particulièrement, qui sont incompatibles avec la tenue aux hautes températures des capteurs sensibles aux vibrations généralement sur le marché, particulièrement des capteurs piézo-électriques ; en plaçant le capteur à l'intérieur de l'enceinte, ce qui permet de le disposer à proximité immédiate et le plus près possible du tube vibrant, il est possible d'effectuer des mesures avec une bonne sensibilité, ce qui permet d'éviter des interfaces mécaniques complexes qui seraient susceptibles d'entraîner de fortes distorsions entre le phénomène (c'est-à-dire les vibrations du conduit) à mesurer et le phénomène effectivement mesuré ; en outre, en plaçant l'accéléromètre à proximité immédiate de la partie du conduit dont on souhaite mesurer les vibrations, particulièrement les accélérations, et en choisissant un accéléromètre, soit à sensibilité axiale prédominante, soit doté d'une bonne sensibilité selon plusieurs axes, par exemple de sensibilité axiale et tangentielle, ou par exemple à sensibilité triaxiale, il est possible d'effectuer simultanément des mesures des vibrations du tube selon un ou plusieurs axes.

L'invention procure un dispositif de mesure dont l'installation (sur un four de craquage thermique par exemple) est facilitée, notamment en utilisant une canne support de capteur de vibrations, de diamètre réduit, donc susceptible de s'étendre à l'intérieur d'un orifice de diamètre réduit également, percé dans une paroi de l'enceinte (du four), tel que par exemple un orifice initialement prévu pour l'installation d'un brûleur (ou de même conception et de mêmes dimensions approximatives) ; à cet effet, le support tubulaire du capteur a de préférence un diamètre inférieur à 100 mm, par exemple de l'ordre de 50 mm ; l'installation du dispositif de mesure ne nécessite pas d'intervention ou de modification sur le conduit, ni sur l'enceinte.

L'invention procure également un dispositif de fixation souple (ou suspension) de l'ensemble essentiellement rigide constitué par le capteur et son support tubulaire s'étendant de part et d'autre de la paroi de l'enceinte, dont les fréquences propres de vibrations, qui sont directement liées à la raideur (statique et dynamique particulièrement) des moyens de fixation, permettent d'obtenir des fréquences de résonance du montage qui ne sont pas situées dans la plage de mesure, telles que par exemple des fréquences de résonance de l'ensemble monté, qui sont, soit inférieures à 20 Hz, notamment inférieures à 10 Hz, soit supérieures à 200 Hz au moins, par exemple supérieures à 1000 Hz.

L'invention permet également de générer des efforts d'appui de l'extrémité interne du support de capteur sur la paroi externe du conduit (ou tube), qui permettent d'assurer une liaison mécanique correcte, entre le conduit et le capteur, dans la plage de fréquence considérée, et qui permettent la transmission au capteur des vibrations du conduit.

Selon une caractéristique préférentielle, le dispositif selon l'invention comporte deux circuits indépendants dans lesquels circulent un ou plusieurs fluides de refroidissement, par exemple de l'eau, ce qui permet de maintenir le capteur de vibrations à une température inférieure à 200°C pour une température régnant dans l'enceinte qui est de l'ordre de 800 à 900°C par exemple.

Les moyens de traitement du signal ou des signaux délivrés par le capteur de vibration sont par exemple choisis parmi ceux proposés par la Société BRUEL et KJAER ; ces moyens peuvent être analogiques et/ou numériques ; ils peuvent comprendre des moyens de pré-amplification, de numérisation, de calcul (de moyennes temporelles par exemple, de pondération), d'enregistrement et de visualisation notamment.

Les nombreux avantages procurés par l'invention seront mieux compris au travers de la description suivante qui se réfère aux dessins annexés, qui illustrent sans aucun caractère limitatif des modes préférentiels de réalisation de l'invention.

Dans les dessins, les éléments identiques ou similaires portent, sauf indication contraire, les mêmes références d'une figure à l'autre.

La figure 1 illustre en vue en perspective schématique les principaux constituants d'un dispositif de mesure selon l'invention et leur mise en oeuvre pour la mesure de vibrations de tubes disposés dans l'enceinte d'un four de craquage thermique équipé de brûleurs alimentés en combustible selon un débit variable (par exemple pulsé).

Les figures 2 et 3 illustrent un mode préférentiel de réalisation d'un support de capteur et son montage sur les parois d'un four selon un mode particulier de réalisation de l'invention.

La figure 3 est une vue en coupe longitudinale selon l'axe longitudinal Y du support de capteur.

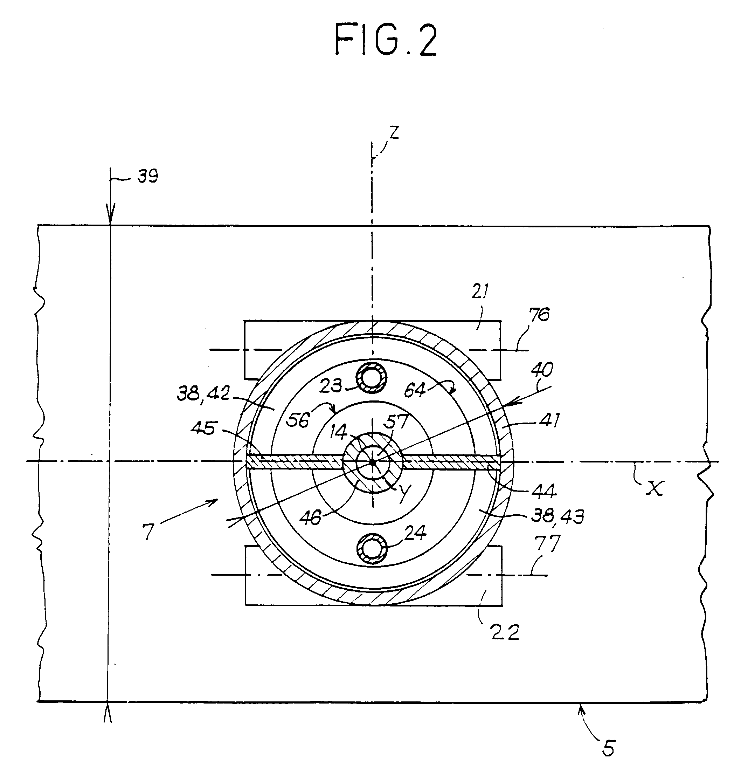

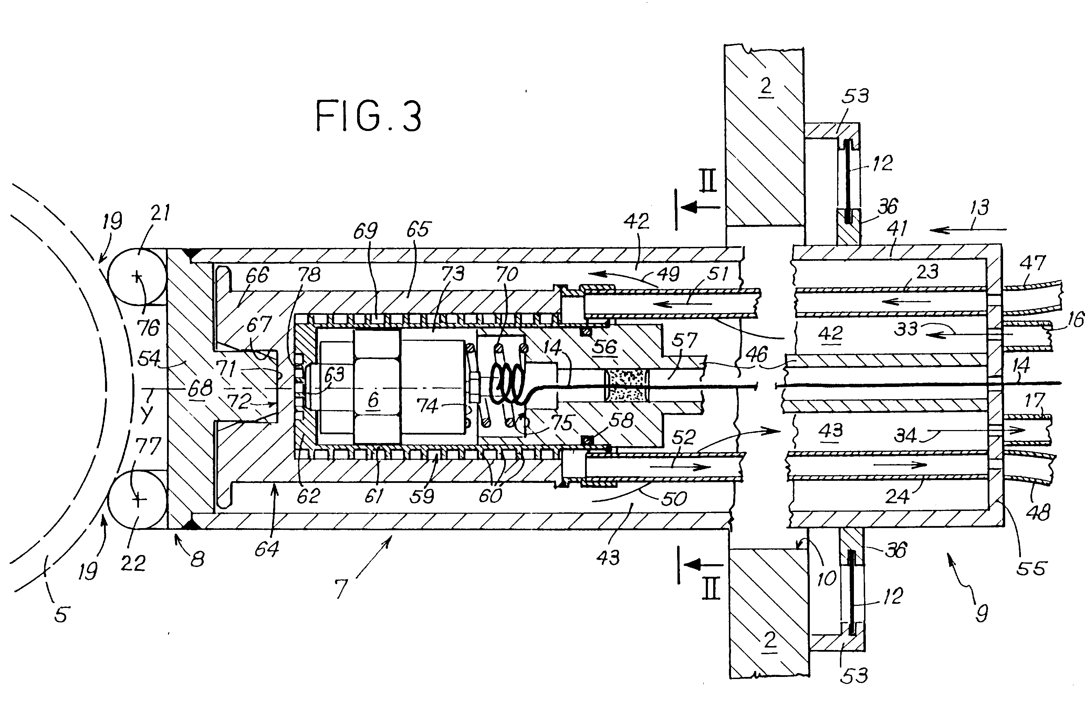

La figure 2 est une coupe selon II/II de la figure 3.

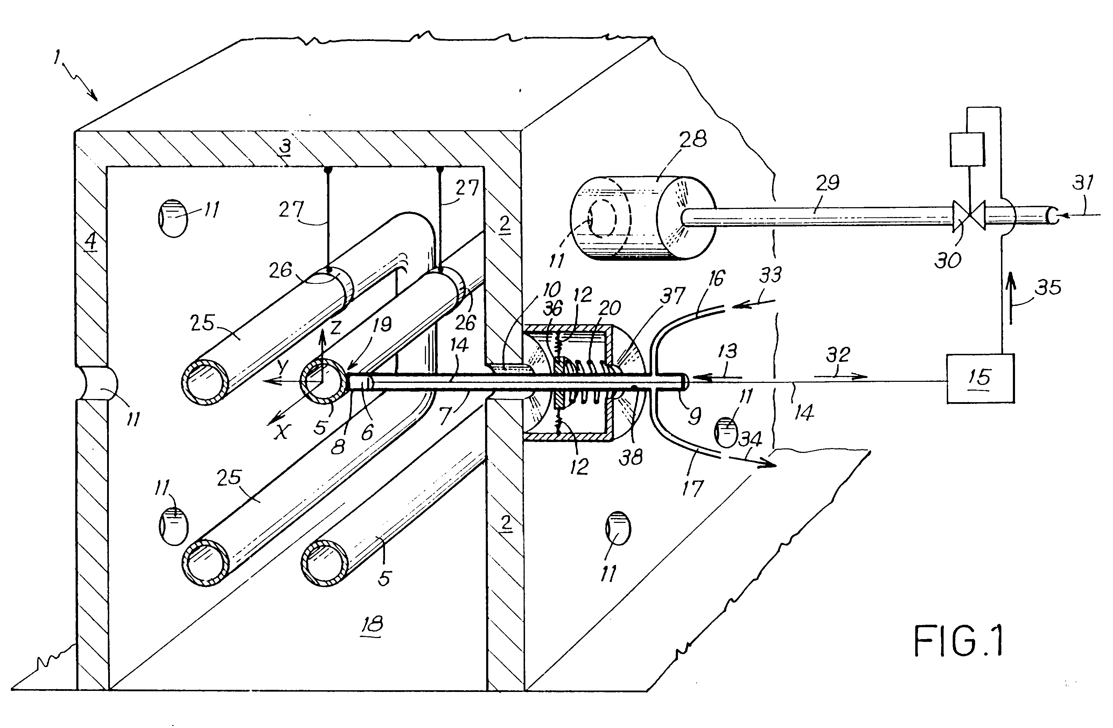

Par référence à la figure 1 particulièrement, le four 1 comporte une paroi latérale 2, une paroi supérieure 3 et une paroi latérale 4 disposée en regard de la paroi 2, lesquelles parois délimitent une enceinte 18, dans laquelle s'étendent des tubes 5 et 25, à l'intérieur desquels circulent des produits chimiques.

Les parois 2 et 4 de l'enceinte du four sont équipées d'orifices 11 permettant l'installation de brûleurs, tels que celui schématiquement représenté et repéré 28, figure 1.

Les tubes 5 et 25, par exemple coudés pour former un ou plusieurs serpentins, sont fixés à la paroi supérieure 3 du four 1, par l'intermédiaire de colliers 26 cerclant une zone des tubes, lesquels colliers sont liés à la paroi 3 par des tiges de fixation 27.

Dans le montage schématiquement représenté figure 1, le dispositif de mesure est destiné à permettre de mesurer les vibrations d'une partie ou zone 19 dite zone de mesure, constituant une partie du tube 5 s'étendant localement selon un axe X, par exemple horizontal.

Le dispositif de mesure comporte un accéléromètre 6 disposé à l'intérieur de la cavité 38 délimitée par les parois du support 7 du capteur 6, lequel support 7 est de forme généralement tubulaire allongée selon un axe longitudinal Y, par exemple horizontal, perpendiculaire à l'axe X.

Le capteur 6 est positionné ou fixé à l'extrémité dite interne 8 du support 7, dont la deuxième extrémité dite externe 9, est située à l'extérieur du four 1, le support 7 s'étendant au travers d'un orifice 10 identique ou similaire aux orifices 11 prévus dans les parois du four pour permettre le montage et le fonctionnement de brûleurs tels que celui repéré 28.

Le capteur 6 est sensible aux vibrations du tube 5, grâce à la mise en contact et à l'appui de l'extrémité 8 du support 7 avec la zone 19 de mesure formant partie du tube 5, par des moyens d'appui exerçant un effort sur le support 7 selon la flèche 13 représentée aux figures 1 et 3.

Le capteur 6 délivre un signal 32 représentatif des vibrations de la zone 19 du tube, lequel signal 32 est véhiculé par un fil ou câble 14, dont une partie s'étend à l'intérieur du support 7, jusqu'à une unité 15 de traitement des signaux 32, laquelle unité 15 peut être utilisée le cas échéant pour délivrer un signal 35 de commande du fonctionnement d'une vanne 30 générant des pulsations du débit 31 d'alimentation en combustible par une conduite 29 d'un brûleur 28 du four 1.

Le montage du support 7 du capteur 6 par rapport à la paroi 2 du four 1, s'effectue par l'intermédiaire d'une bride 36 également représentée figure 3, qui est fixée rigidement à l'extérieur de la paroi tubulaire du support 7, laquelle bride est fixée à la paroi 2 du four 1 par l'intermédiaire de moyens de support ou suspensions 12, tels que des lames de ressorts assurant par exemple une suspension de raideur importante selon les axes X et Z (qui est par exemple vertical) et de raideur très faible selon l'axe Y longitudinal du support 7, afin de définir une fréquence propre de vibrations du montage selon cet axe Y, qui est faible (par exemple inférieure à 20 Hz) pour ne pas perturber la vibration du tube 5 (selon cet axe) et la mesure correspondante.

Comme schématiquement représenté figure 1, la force 13 exercée sur le support 7 permettant de garantir son appui sur la zone 19 du tube 5, peut par exemple être obtenue grâce à un ressort 20 prenant appui, d'une part sur ladite bride 36 liée au support 7, et prenant d'autre part appui sur une plaque 37 liée rigidement à la paroi 2.

Comme illustré figure 1 schématiquement, une canalisation 16 d'arrivée d'eau selon la flèche 33 pour le refroidissement du capteur 6, est raccordée et fixée à l'extrémité 9 du support 7 et permet l'introduction dans la cavité 38 délimitée par ce support, de l'eau de refroidissement, qui circule jusqu'au capteur 6 puis revient à l'extrémité 9 pour s'échapper par la conduite de sortie 17 selon la flèche 34.

Comme illustré particulièrement figure 3, on peut dans un mode préférentiel de réalisation, utiliser pour le refroidissement du capteur 6 de vibrations, deux circuits indépendants dans lesquels circule de l'eau par exemple.

Le premier circuit, déjà brièvement explicité par référence à la figure 1, comporte comme également représenté figure 3, ladite canalisation d'entrée 16, de préférence souple, permettant l'entrée d'eau selon la flèche 33 à l'intérieur du support 7 délimitant une cavité repérée 38 et divisée comme représenté figures 3 et 2 particulièrement, par des parois 44 et 45, qui séparent cette cavité 38, sur une partie substantielle de la longueur de la canne ou support 7 c'est-à-dire entre le fond externe 55 du support 7 et jusqu'au voisinage du capteur 6 et des boîtiers qui l'entourent, en une première cavité ou conduit 42 dans laquelle l'eau circule selon la flèche 49 pour être véhiculée jusqu'au boîtier 64 entourant le capteur 6 et en une deuxième cavité 43 ; l'eau de refroidissement circule ensuite selon la flèche 50 dans la deuxième cavité 43 et est évacuée du support 7 selon la flèche 34, puis par une canalisation 17.

Le deuxième circuit de refroidissement comporte une canalisation d'entrée 47, de préférence souple, qui communique par l'intermédiaire d'un orifice prévu dans le fond 55 du support 7, avec une canalisation interne 23, dans laquelle l'eau de refroidissement circule selon la flèche 51.

L'eau ainsi délivrée par ce deuxième circuit de refroidissement, circule dans une cavité 69 ou espace compris entre un premier boîtier 59 dans lequel est logé le capteur 6 et ledit deuxième boîtier 64, puis est évacuée selon la flèche 52 par une deuxième canalisation 24 qui communique par un autre orifice prévu dans le fond 55 du support 7, avec une canalisation, de préférence souple, de sortie 48 de l'eau de ce deuxième circuit de refroidissement.

Comme illustré particulièrement figures 1 et 3, le capteur 6, par exemple un accéléromètre piézo-électrique, délivre un signal 32 représentatif des vibrations auxquelles il est soumis, par un fil 14 (s'étendant à l'intérieur d'une gaine 46 rigide s'étendant jusqu'au fond 55 du boîtier percé d'un orifice par lequel passe ledit fil 14) de raccordement du capteur à une unité 15 de traitement représentée figure 1.

Par référence à la figure 3 particulièrement, le capteur 6 est fixé par sa base 63, par exemple filetée, dans la base 62 constituant le fond d'un boîtier 59 doté, outre le fond 62, de parois latérales 61, par exemple cylindriques de section circulaire, qui délimitent une cavité 73 recevant le capteur 6.

La cavité 73 (par exemple en communication avec l'air ambiant extérieur du four) est isolée de façon étanche par rapport aux cavités 38, 42, 43 remplies d'eau, par l'extrémité 56 du tube 46 formant une gaine 57 du fil 14, grâce à des joints 58.

Le capteur 6, qui peut être simplement centré par sa base 63 dans le fond 62, peut être maintenu en appui contre ce fond par un ressort 70, prenant appui, d'une part sur la face supérieure 74 du capteur 6, et d'autre part sur une face 75 de la pièce 56 qui est disposée en regard de la face supérieure 74 du capteur.

Le premier boîtier 59 recevant le capteur 6 est, comme expliqué précédemment refroidi par le deuxième circuit de refroidissement de l'eau circulant selon les flèches 51, 52 et transitant dans l'espace annulaire 69 prévu entre le boîtier 59 et le boîtier 64 entourant celui-ci.

De préférence, des ailettes 60 sont prévues sur la face externe des parois latérales 61 du boîtier 59 pour améliorer l'échange thermique entre le boîtier 59 et le fluide de refroidissement circulant dans la cavité 69, et par conséquent pour favoriser le refroidissement du capteur 6.

Le deuxième boîtier 64 entourant le premier boîtier 59, comporte une base ou fond 66 et des parois latérales 65 qui entourent les parois latérales 61 du premier boîtier 59.

Le boîtier 64 est muni d'un trou 67 non débouchant, qui permet l'appui du boîtier 64 par sa face 72 sur la face 71 d'un plot ou pion 68 faisant partie du fond 54 du support 7 obturant la paroi cylindrique 41 de celui-ci à son extrémité interne 8.

A l'extérieur du fond 54 sont prévues deux pièces d'appui 21 et 22 qui, comme représentées également figure 2, sont de préférence en forme de barreaux cylindriques de section circulaire s'étendant respectivement selon deux axes 76 et 77 qui, lorsque la canne est en position de mesure, s'étendent parallèlement à l'axe X longitudinal du tube 5 dont on veut mesurer la vibration, de sorte qu'une zone de contact s'étendant selon une génératrice commune des surfaces externes cylindriques des pièces 21 et 22 et du tube 5, permet une bonne transmission des vibrations du tube 5 aux pièces d'appui 21 et 22, qui sont ensuite transmises au capteur 6 par l'intermédiaire du fond 54 du support 7, et du fond 66 du boîtier 64 par l'interface de contact 71, 72, et du fond 62 du boîtier 59.

Comme illustré figure 3 particulièrement, le fond 62 du boîtier 59 comporte de préférence également des ailettes 78 permettant de diminuer l'intensité du flux thermique circulant par conduction de l'extérieur du support 7 jusqu'au capteur 6, par les masses généralement métalliques des pièces 21, 22, 54, 66 et 62 dont le contact est nécessité pour transmettre les vibrations et qui par conséquent, est susceptible de permettre le passage d'un flux thermique par conduction.

Comme illustré figure 2 particulièrement, le diamètre 40 de la paroi cylindrique 41 de la canne 7 formant support-capteur est inférieur au diamètre 39 du tube 5.

Dans le mode de réalisation illustré figure 3, la force d'appui 13 du support 7 de capteur contre le tube 5, peut, en partie au moins, résulter de la pression statique présente dans les circuits de refroidissement, et le montage (la fixation) et le guidage en translation selon l'axe Y du support 7 de capteur, peuvent être obtenus par des lames de ressorts 12 fixés d'une part à la bride 36 liée rigidement à la paroi 41 du support 7, et d'autre part à des pattes 53 liées rigidement à la paroi 2 du four.

## Revendications

1. Procédé de mesure de vibrations d'un conduit (5) disposé dans une enceinte thermique (1) et dans lequel circule au moins un fluide, dans lequel on utilise un capteur (6) de vibrations disposé à l'intérieur de l'enceinte thermique.

2. Procédé suivant la revendication 1, dans lequel on refroidit ledit capteur (6).

3. Procédé suivant l'une quelconque des revendications 1 à 2, dans lequel on mesure les accélérations d'une zone (19) dudit conduit.

4. Procédé suivant l'une quelconque des revendications 1 à 3, dans lequel on solidarise ledit capteur (6) à un support (7), et dans lequel on met en appui ledit support (7) de capteur sur ledit conduit, pour permettre et favoriser une transmission par conduction des vibrations dudit conduit à une partie au moins dudit support, et dudit support audit capteur.

5. Procédé suivant la revendication 4 dans lequel :
- on dispose ledit capteur (6) dans une première cavité (73) prévue à une première extrémité du support (7),
- on raccorde à une deuxième extrémité (9) du support (7) de capteur (6), un conduit (16) d'entrée d'un fluide de refroidissement du capteur et un conduit (17) de sortie du fluide de refroidissement,
- on fixe le support (7) à une paroi (2) de l'enceinte par des moyens de fixation (12) flexibles, la première extrémité (8) du support (7) étant mise en contact avec une zone (19) de la paroi extérieure du conduit (5) dont on veut mesurer les vibrations,
- on applique au support (7) de capteur (6) une force (13) d'appui,
- on fait circuler un fluide de refroidissement à l'intérieur du support (7) du capteur (6),
- on mesure et on traite les signaux (32) délivrés par le capteur (6),
- le cas échéant, on émet un signal (35) d'alarme et/ou de commande de fonctionnement d'un organe générateur de vibrations.

6. Dispositif de mesure de vibrations d'un conduit (5) disposé dans une enceinte thermique (1), qui comporte un capteur (6) de vibrations disposé à l'intérieur de l'enceinte thermique.

7. Dispositif suivant la revendication 6, qui comporte un moyen de refroidissement dudit capteur.

8. Dispositif suivant la revendication 7, dans lequel le moyen de refroidissement comporte au moins un circuit (16, 17), de préférence deux circuits distincts, de refroidissement dudit capteur par un fluide, de préférence par un liquide de refroidissement.

9. Dispositif suivant l'une quelconque des revendications 6 à 8, qui comporte un support (7) qui comporte :
- un premier boîtier (59) délimitant une première cavité (73) dans laquelle est logé le capteur (6) de vibrations,
- un deuxième boîtier (64) délimitant une deuxième cavité (69) recevant ledit premier boîtier (59),
- des conduits (47, 23) d'entrée d'un premier fluide de refroidissement, qui communiquent avec ladite deuxième cavité (69) et des conduits (24, 48) correspondants de sortie dudit premier fluide de refroidissement,
- des conduits (16, 17) d'entrée (33) et de sortie (34) d'un deuxième fluide de refroidissement à l'intérieur du support (7), permettant la circulation à l'intérieur dudit support (7) et autour dudit deuxième boîtier (64) d'un deuxième fluide de refroidissement.

10. Dispositif suivant l'une quelconque des revendications 6 à 9, dans lequel ledit capteur est essentiellement constitué par un accéléromètre, de préférence piézo-électrique.

11. Dispositif suivant l'une quelconque des revendications 6 à 10, qui comporte :
- un support (7) allongé selon un premier axe (Y), creux, étanche, comportant une première extrémité (8) et une deuxième extrémité (9), lequel capteur est disposé ou fixé à l'intérieur dudit support creux (7), au voisinage de ladite première extrémité (8),
- un moyen (12) de fixation souple selon au moins une direction parallèle à l'axe longitudinal (Y), dudit support (7) à une paroi (2) de l'enceinte, de sorte que ledit support s'étend au travers d'un orifice (10) prévu dans une paroi (2) de l'enceinte, et de sorte que :
• son axe longitudinal s'étend sensiblement perpendiculairement à l'axe longitudinal (X) de la partie du conduit (5) contenant la zone (19) dite de mesure,
• ladite première extrémité (8) dudit support (7) est placée au contact de la face externe de la paroi du conduit dans ladite zone (19) de mesure, de sorte que ladite première extrémité (8) et ledit capteur sont disposés à l'intérieur de l'enceinte,
- des moyens de mise en appui qui exercent sur le support (7) une force (13) dirigée vers le tube (5).

12. Dispositif suivant l'une quelconque des revendications 6 à 11, comportant en outre des moyens de guidage en translation selon l'axe (Y) longitudinal de la canne (7) formant support du capteur (6), comportant par exemple des lames (12) formant ressorts de suspension et servant également au guidage du support.

13. Procédé de traitement physique ou chimique d'un ou plusieurs produits circulant à l'intérieur d'un conduit (5) disposé dans une enceinte thermique (1), dans lequel on soumet le ou les produit(s) audit traitement à l'intérieur du conduit, et dans lequel on soumet ledit conduit à des vibrations, caractérisé en ce que l'on mesure les vibrations du conduit avec un capteur (6) disposé à l'intérieur de l'enceinte.

14. Procédé suivant la revendication 13, dans lequel on mesure et on traite les signaux délivrés par ledit capteur de vibrations dans une bande de fréquence inférieure à 5000 Hz.

15. Procédé suivant la revendication 13, de fabrication d'un ou plusieurs produits chimiques, dans lequel on réalise une réaction chimique en faisant circuler un ou plusieurs réactifs à l'intérieur du conduit disposé dans l'enceinte.

16. Dispositif de traitement thermique d'un ou plusieurs produits circulant à l'intérieur d'un conduit (5), qui comporte :
- une enceinte thermique (1) à l'intérieur de laquelle est disposé le conduit (5),
- un générateur (28, 30) de mise en vibrations dudit conduit,
caractérisé en ce qu'il comporte un capteur (6) de vibrations disposé à l'intérieur de l'enceinte.
